# EUROPEAN PATENT APPLICATION

(11) **EP 4 465 415 A1**
(43) Date of publication of application: **20.11.2024**
(21) Application number: 24173789.9
(22) Date of filing: 02.05.2024
(51) Int. Cl.: H01M 10/613, H01M 10/653, H01M 10/6551, C08K 3/04, C08K 3/22, C08K 3/28, C08K 3/38, C08K 7/06, C08L 63/00, C08L 83/04

(54) **HEAT CONDUCTIVE MATERIAL, METHOD FOR PRODUCING HEAT CONDUCTIVE MATERIAL, AND BATTERY MODULE**

(30) Priority: 19.05.2023 JP 2023083094
(71) Applicant: TOYOTA JIDOSHA KABUSHIKI KAISHA, Aichi-ken 471-8571 (JP)
(72) Inventor: NAKANISHI, Koji, Toyota-shi, 471-8571 (JP)
(74) Representative: D Young & Co LLP

(57) **Abstract**

A main object of the present disclosure is to provide a heat conductive material that achieves both heat conductivity and insulation properties. The present disclosure achieves the object by providing a heat conductive material including a matrix resin and a filler, wherein the filler includes a first filler that is a bar shape or a flake shape, and a second filler that is a bar shape or a flake shape; a volume resistivity of the first filler is 10¹²Ωcm or more; a magnetic susceptibility of the first filler is 10⁻⁶ or less; a magnetic susceptibility of the second filler is 10⁻⁵ or more; a content of the first filler is more than a content of the second filler; and in a cross-sectional view of the heat conductive material, when a filler X designates the filler of which angle of the longitudinal direction relative to a thickness direction of the heat conductive material is ±30° or less, a rate of the filler X with respect to all the filler is 30% or more.

## Description

### Technical Field

The present disclosure relates to a heat conductive material, a method for producing the heat conductive material, and a battery module.

### Background Art

A technique of radiating heat generated by a heat generating material using a heat radiating material has been known. For example, in electronic equipment such as a computer, a heat radiating element such as a heat sink is used for radiating heat generated by a heat generating element such as a semiconductor element. For the purpose of improving heat conduction efficiency from the heat generating element to the heat radiating element, a heat conductive material may be disposed between the heat generating element and the heat radiating element.

Patent Literature 1 discloses a heat conductive compact configured by magnetic field orientation of boron nitride powder in constant direction in a polymer. Also, Patent Literature 2 discloses a heat conductive resin compact comprising, as a heat conductive filler, a heat conductive particle with high magnetic field responsiveness and a heat conductive particle with low magnetic field responsiveness, wherein the heat conductive particle with high magnetic field responsiveness is oriented in a thickness direction of the compact. Also, Patent Literature 3 discloses a sheet shape heat radiating material comprising: a heat conductive filler including an agglomerated hexagonal boron nitride powder having a specified orientation property index, and an aluminum oxide powder; and a silicone resin.

### Citation List

### Patent Literatures

Patent Literature 1: Japanese Patent Application Laid-Open (JP-A) No. 2001-172398
Patent Literature 2: JP-A No. 2021-038353
Patent Literature 3: International Application Publication: WO 2019-031458

### Summary of Disclosure

### Technical Problem

Since electronic equipment in recent years has high heat generation density and is often used under high voltage, it is important to secure the heat radiation properties and insulation properties. Also, for example, batteries also generate heat during charge and discharge, and are used under high voltage, and thus it is important to secure the heat radiation properties and insulation properties. A material with high conductivity (low insulation properties) such as a metal is often used as the heat radiating element, and thus the heat conductive material disposed between the heat generating element and the heat radiating element is required to have excellent insulation properties in addition to excellent heat conductivity. Details will be described later, but when aiming to improve the heat conductivity, the insulation properties may be insufficient, and it is difficult to achieve both of the heat conductivity and the insulation properties.

The present disclosure has been made in view of the above circumstances, and a main object thereof is to provide a heat conductive material that achieves both heat conductivity and insulation properties.

### Solution to Problem

[1] A heat conductive material comprising a matrix resin and a filler, wherein
   the filler includes a first filler that is a bar shape or a flake shape, and a second filler that is a bar shape or a flake shape;
   a volume resistivity of the first filler is 10¹²Ωcm or more;
   a magnetic susceptibility of the first filler is 10⁻⁶ or less;
   a magnetic susceptibility of the second filler is 10⁻⁵ or more;
   a content of the first filler is more than a content of the second filler; and
   in a cross-sectional view of the heat conductive material, when a filler X designates the filler of which angle of the longitudinal direction relative to a thickness direction of the heat conductive material is ±30° or less, a rate of the filler X with respect to all the filler is 30% or more.
[2] The heat conductive material according to [1], wherein a dielectric breakdown voltage of the heat conductive material in the thickness direction is 5 kV/mm or more.
[3] The heat conductive material according to [1] or [2], wherein a heat conductivity of the heat conductive material in the thickness direction is 2.03 W/mK or more.
[4] The heat conductive material according to any one of [1] to [3], wherein a ratio of the filler with respect to a total of the matrix resin and the filler is 20 mass% or more and less than 50 mass%.
[5] The heat conductive material according to any one of [1] to [4], wherein a ratio of the filler with respect to a total of the matrix resin and the filler is 10 volume% or more and 40 volume% or less.
[6] The heat conductive material according to any one of [1] to [5], wherein a ratio of the filler X with respect to all the filler is 50% or more.
[7] The heat conductive material according to any one of [1] to [6], wherein a ratio of the filler X with respect to all the filler is 70% or more.
[8] The heat conductive material according to any one of [1] to [7], wherein a volume resistivity of the matrix resin is 10¹²Ωcm or more.
[9] The heat conductive material according to any one of [1] to [8], wherein a volume resistivity of the second filler is 10⁻²Ωcm or less.
[10] The heat conductive material according to any one of [1] to [9], wherein the matrix resin is a cured product of a curable resin.
[11] The heat conductive material according to [10], wherein the curable resin is a thermosetting resin.
[12] The heat conductive material according to [11], wherein the thermosetting resin is a silicone resin or an epoxy resin.
[13] The heat conductive material according to any one of [1] to [12], wherein the first filler is a flake shape, and the second filler is a bar shape.
[14] The heat conductive material according to any one of [1] to [13], wherein a material of the first filer is a boron nitride, an aluminum nitride, a silicon nitride, a beryllia, a magnesia, or an alumina.
[15] The heat conductive material according to any one of [1] to [14], wherein a material of the second filler is a carbon, a metal or a metal oxide.
[16] The heat conductive material according to any one of [1] to [15], wherein the heat conductive material is used in a battery module.
[17] A method for producing the heat conductive material according to any one of [1] to [16], the method comprising:
   a precursor layer forming step of forming a precursor layer using a resin composition containing a curable resin for forming the matrix resin, and the filler; and
   a curing step of curing the thermosetting resin by applying a magnetic field to the precursor layer from the thickness direction while orienting the filler in the precursor layer.
[18] The method for producing the heat conductive material according to [17], wherein a viscosity of the curable resin is 1 Pa·s or less.
[19] A battery module comprising a battery and a heat radiating material, wherein
   the heat conductive material according to any one of [1] to [16] is disposed between the battery and the heat radiating material.

### Advantageous Effects of Disclosure

The heat conductive material in the present disclosure exhibits an effect of achieving both heat conductivity and insulation properties.

### Brief Description of Drawings

FIG. 1A is a schematic cross-sectional view exemplifying the heat conductive material in the present disclosure, and FIG. 1B is a schematic perspective view enlarging a part of the heat conductive material in the present disclosure.
FIG. 2 is an explanatory view explaining the filler X in the present disclosure.
FIG. 3A is a schematic perspective view and FIG. 3B is a schematic plan view exemplifying the shape of the filler in the present disclosure.
FIG. 4A is a schematic side view and FIG. 4B is a schematic plan view exemplifying the shape of the filler in the present disclosure.
FIG. 5 is a flow chart exemplifying the method for producing the heat conductive material in the present disclosure.
FIGS. 6A and 6B are schematic perspective views exemplifying the battery module in the present disclosure.
FIG. 7A is a binary image and FIG. 7B is a histogram exemplifying the results of Examples in the present disclosure.
FIG. 8A is a binary image and FIG. 8B is a histogram exemplifying the results of Comparative Examples in the present disclosure.
FIG. 9 is a graph showing the relation of the filler amount and the heat conductivity in Examples 1 to 4 and Comparative Examples 1 to 10.

### Description of Embodiments

The heat conductive material, the method for producing the heat conductive material, and the battery module in the present disclosure will be hereinafter explained in details with reference to drawings. Each drawing described as below is a schematic view, and the size and the shape of each portion are appropriately exaggerated in order to be understood easily.

### A. Heat conductive material

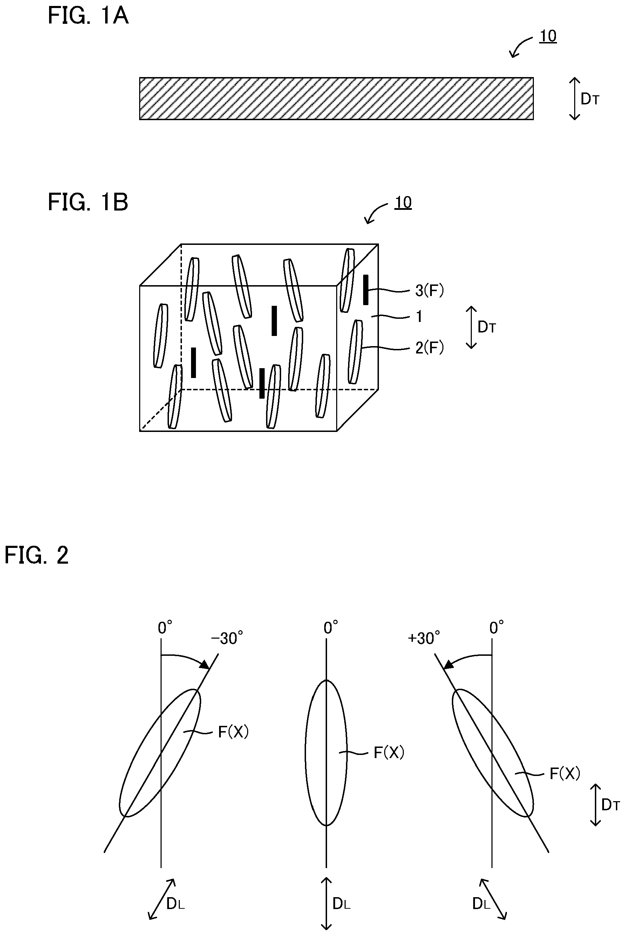

FIG. 1A is a schematic cross-sectional view exemplifying the heat conductive material in the present disclosure, and FIG. 1B is a schematic perspective view enlarging a part of the heat conductive material in the present disclosure. As shown in FIG. 1A, heat conductive material 10 is, for example, a sheet shape. Also, as shown in FIG. 1B, the heat conductive material 10 contains matrix resin 1 and filler F. Further, the filler F includes first filler 2 that is a bar shape or a flake shape, and second filler 3 that is a bar shape or a flake shape. A volume resistivity of the first filler 2 is 10¹²Ωcm or more. Also, a magnetic susceptibility of the first filler 2 is 10⁻⁶ or less and a magnetic susceptibility of the second filler 3 is 10⁻⁵ or more. In other words, the magnetic susceptibility of the second filler 3 is higher than that of the first filler 2, and thus has high magnetic field responsiveness. Also, a content of the first filler 2 is more than a content of the second filler 3.

As shown in FIG. 1A and FIG. 2, in the cross-sectional view of the heat conductive material 10, D_{L} designates a longitudinal direction of the filler F. "Filler X" designates the filler F of which angle of the longitudinal direction D_{L} relative to thickness direction D_{T} of the heat conductive material 10 is ±30° or less. In the present disclosure, a rate of the filler X with respect to all the filler F included in the heat conductive material 10 is 30% or more.

According to the present disclosure, when the first filler and the second filler of which magnetic susceptibility is different from each other are used, and further when the rate of the filler X is in the specified range, the heat conductive material may achieve both of heat conductivity and insulation properties. As described above, since electronic equipment in recent years has high heat generation density and is often used under high voltage, it is important to secure the heat radiation properties and insulation properties. Also, for example, batteries also generate heat during charge and discharge, and are used under high voltage, and thus it is important to secure the heat radiation properties and insulation properties. A material with high conductivity (low insulation properties) such as a metal is often used as the heat radiating element, and thus the heat conductive material disposed between the heat generating element and the heat radiating element is required to have excellent insulation properties in addition to excellent heat conductivity.

For example, although the boron nitride described in Patent Literature 1 is a material with excellent heat conductivity and insulation properties, it is a flake shape (squamous) powder, and is known to have anisotropic heat conductivity. In specific, the heat conductivity in the thickness direction and the heat conductivity in the in-plane direction (direction orthogonal to the thickness direction) are greatly different, and the latter is especially large. For this reason, in order to express excellent heat conductivity in the thickness direction of the heat conductive material, it is necessary to orient the boron nitride along with the thickness direction of the heat conductive material. For example, Patent Literature 1 discloses an orientation of the boron nitride by applying the magnetic field to the boron nitride, but since the boron nitride has low magnetic field responsiveness (low magnetic susceptibility), it is difficult to orient the boron nitride along with the thickness direction of the heat conductive material, and there is a room for improvement in improving the heat conductivity.

Meanwhile, Patent Literature 2 discloses that the heat conductive particle with high magnetic field responsiveness and the heat conductive particle with low magnetic field responsiveness are used together. Further, Patent Literature 2 discloses that a nickel plated graphite is used as the heat conductive particle with high magnetic field responsiveness, and discloses that the content of the heat conductive particle with high magnetic field responsiveness is more than the content of the heat conductive particle with low magnetic field responsiveness. Since the nickel plated graphite has high electric conductivity, it is difficult to express excellent insulation properties.

Also, Patent Literature 3 discloses a sheet shaped heat radiating material comprising: a heat conductive filler including an agglomerated hexagonal boron nitride powder having a specified orientation property index, and an aluminum oxide powder; and a silicone resin. Since the boron nitride and the aluminum oxide have low magnetic field responsiveness (low magnetic susceptibility), the orientation of the boron nitride along with the thickness direction of the heat conductive material is difficult, and there is a room for improvement in improving the heat conductivity.

In contrast, in the present disclosure, the second filler with high magnetic field responsiveness is used in addition to the first filler with low magnetic field responsiveness, and thus the second filler is a driving force of orienting the first filler. For this reason, orientation of the first filler that is a bar shape or a flake shape along with the thickness direction of the heat conductive material is easy, and further improvement of the heat conductivity may be achieved. Also, the volume resistivity of the first filler is high, and further, since the content of the first filler is more than the content of the second filler, for example, even when the second filler has electric conductivity, excellent insulation properties can be secured. Therefore, both heat conductivity and insulation properties in high level can be achieved.

### 1. Filler

The filler in the present disclosure includes a first filler that is a bar shape or a flake shape, and a second filler that is a bar shape or a flake shape. In the present disclosure, the "bar shape" includes a shape referred to as a fiber shape or a needle shape, and the "flake shape" includes a shape referred to as a squamous, a thin piece shape or a plate shape.

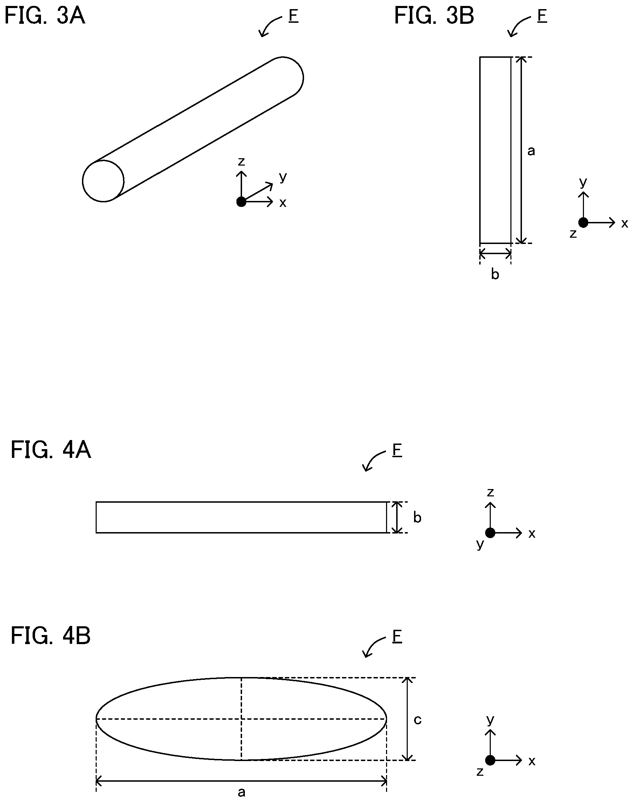

FIG. 3A is a schematic perspective view exemplifying a bar shape filler, and FIG. 3B is a schematic plan view exemplifying the bar shape filler. The bar shape filler F usually has a long and narrow shape. The bar shape filler F has a shape of which longest part is the length of extending direction (y-axis direction in FIGS. 3A and 3B). Also, in FIGS. 3A and 3B, the shape of the outer periphery of the filler when cut in a plane (x-z plane) of which normal direction is the extending direction (y-axis direction) is, a perfect circle. Meanwhile, the shape of the outer periphery may be shapes other than the perfect circle. The shapes other than the perfect circle are not particularly limited, and examples thereof may include an oval; and polygon shapes such as a square.

FIG. 4A is a schematic side view exemplifying a flake shape filler, and FIG. 4B is a schematic plan view exemplifying the flake shape filler. The flake shape filler F usually has a shape of thin thickness. The flake shape filler F has a shape of which shortest part is the length of extending direction (thickness direction, normal direction of main surface, z-axis direction in FIGS. 4A and 4B). Also, in FIG. 4B, the shape of outer periphery of the filler when viewed from the thickness direction (z-axis direction) is an oval. Meanwhile, the shape of the outer periphery may be shapes other than the oval. The shapes other than the oval are not particularly limited, and examples thereof may include a perfect circle; and polygon shapes such as a square.

In the filler, the length of the longest part is regarded as "length a" and the length of the shortest part is regarded as "length b". As shown in FIG. 3B, in the case of the bar shape filler F, usually, the length of the extending direction (longitudinal direction, y-axis direction) corresponds to "length a", and the length of the radial direction orthogonal to the extending direction corresponds to "length b". Meanwhile, as shown in FIG. 4B, in the case of the flake shape filler F, usually, the length of the extending direction (thickness direction, z-axis direction) corresponds to "length b", and the length of the longitudinal direction of the filler F viewed from the thickness direction corresponds to "length a". Also, as shown in FIG. 4B, in the case of the flake shape filler F, the length of the direction orthogonal to the longitudinal direction of the filler F viewed from the thickness direction (z-axis direction) is regarded as "length c". The length a, the length b and the length c are determined by the observation with an electron microscope or a CT detecting device. The number of samples used in the observation is preferably 100 or more.

As shown in FIGS. 3A and 3B, in the case of the bar shape filler F, the rate of the length a with respect to the length b, which is a/b is, usually larger than 1, may be 1.2 or more, and may be 1.5 or more. Meanwhile, the a/b is, for example, 15 or less and may be 10 or less. The length a is not particularly limited, but for example, it is 30 um or more and 100 um or less, and may be 40 um or more and 80 um or less. Meanwhile, the length b is not particularly limited, but for example, it is 3 um or more and 30 um or less, and may be 5 um or more and 20 um or less.

As shown in FIGS. 4A and 4B, in the case of the flake shape filler F, the rate of the length a with respect to the length b, which is a/b is usually larger than 1, may be 5 or more, and may be 10 or more. Meanwhile, the a/b is, for example, 100 or less and may be 70 or less. The length a is not particularly limited, but for example, it is 15 um or more and 200 um or less, and may be 20 um or more and 150 um or less. Meanwhile, the length b is not particularly limited, but for example, it is 0.5 um or more and 20 um or less, and may be 1 um or more and 10 um or less. Also, the rate of the length c with respect to the length b, which is c/b is, usually larger than 1, may be 5 or more, and may be 10 or more. Meanwhile, the c/b is, for example, 100 or less and may be 70 or less. The length c is not particularly limited, but for example, it is 15 um or more and 200 um or less, and may be 20 um or more and 150 um or less. Also, the rate of the length a with respect to the length c, which is a/c is, usually larger than 1, and may be 1.2 or more. Meanwhile, the a/c is, for example, 5 or less.

### (1) First filler

The heat conductive material in the present disclosure contains a first filler. The volume resistivity of the first filler is preferably high. In other words, the first filler preferably includes high insulation properties. The reason thereof is to obtain a heat conductive material with excellent insulation properties. The volume resistivity of the first filler is, usually 10¹²Ωcm or more, may be 10¹³Ωcm or more, and may be 10¹⁴Ωcm or more. The volume resistivity can be obtained by a constant voltage application method.

The magnetic susceptibility of the first filler is preferably low. In other words, the magnetic field responsiveness of the first filler is preferably low. In the present disclosure, the magnetic susceptibility refers to a volume susceptibility (SI unit base). The magnetic susceptibility of the first filler is usually 10⁻⁶ or less, and may be 10⁻⁷ or less. The first filler has the magnetic susceptibility of 10⁻⁶ or less, and may be a paramagnetic material with a positive value, and may be a diamagnetic material with a negative value of the magnetic susceptibility.

The heat conductivity of the first filler is preferably high. By using the first filler with high heat conductivity, a heat conductive material with excellent heat conductivity is obtained. Also, the heat conductivity of the first filler is usually higher than that of the matrix resin. The heat conductivity of the first filler is, for example, 20 W/mK or more, may be 50 W/mK or more, and may be 100 W/mK or more. The heat conductivity of the first filler is, for example, 300 W/mk or less.

The first filler is preferably an inorganic filler. Examples of the material of the first filler may include a boron nitride (BN), an aluminum nitride (AlN), a silicon nitride (Si₃N₄), a beryllia (BeO), a magnesia (MgO), and an alumina (Al₂O₃), and among them, the boron nitride (BN) is preferable, and in particular, a hexagonal boron nitride (h-BN) is preferable.

**[Table 1]**

| | Volume resistivity (Ω · cm) | Heat conductivity (W/m · K) |
|---|---|---|
| boron nitride | 10¹⁴ | >200, 60 |
| aluminum nitrude | >10¹⁴ | 70 - 270 |
| silicon nitride | >10¹⁴ | 30 - 80 |
| beryllia | >10¹⁴ | 250 |
| magnesia | 10¹⁷ | 40 |
| alumina | 10¹⁵ | 20 - 36 |

When the aspect ratio designates the above described "a/b, the rate of the length a with respect to the length b", the aspect ratio in the first filler may be larger than the aspect ratio in the second filler. The reason therefor is to facilitate the orientation of the first filler.

The content of the first filler in the heat conductive material relative to 100 mass parts of the matrix resin is, for example, 25 mass parts or more and 90 mass parts or less, and may be 30 mass parts or more and 80 mass parts or less. Also, in the present disclosure, the content of the first filler is usually more than the content of the second filler. The rate of the first filler with respect to the total of the first filler and the second filler is, for example, 85 mass% or more, may be 90 mass% or more, and may be 95 mass% or more.

### (2) Second filler

The heat conductive material in the present disclosure contains a second filler. The magnetic susceptibility of the second filler is higher than that of the first filler. In other words, the magnetic field responsiveness of the second filler is higher than that of the first filler. The magnetic susceptibility of the second filler is, usually 10⁻⁴ or more, and may be 10⁻³ or more. Meanwhile, the magnetic susceptibility of the second filler is, for example, 10⁶ or less. The second filler may be a paramagnetic material of which magnetic susceptibility is 10⁻⁴ or more and 10⁻³ or less, may be a ferromagnetic material of which magnetic susceptibility is 10² or more, and may be a diamagnetic material of which magnetic susceptibility is a negative value.

There are no particular limitations on the volume resistivity of the second filler. The second filler may be a conductor of which volume resistivity is 10⁻²Ωcm or less, may be a semiconductor of which volume resistivity is larger than 10⁻²Ωcm and less than 10⁴Ωcm, and may be an insulating material of which volume resistivity is 10⁴Ωcm or more. The volume resistivity can be obtained by a constant current application method or a constant voltage application method.

The heat conductivity of the second filler is preferably high. By using the second filler with high heat conductivity, a heat conductive material with high heat conductivity is obtained. Also, the heat conductivity of the second filler is usually higher than that of the matrix resin. The heat conductivity of the second filler is preferably higher than that of the first filler.

The second filler is preferably an inorganic filler. Examples of the material of the second filler may include a carbon, a metal and a metal oxide. Examples of the metal may include a nickel, an iron and a cobalt. Examples of the metal oxide may include an iron oxide, a chrome oxide, and a ferrite. Specific examples of the second filler may include a carbon fiber, a metal fiber and a metal oxide fiber. For example, when the second filler is a bar shape, the second filler may include a base material that is the bar shape, and a coating layer that covers a surface of the base material. Examples of the bar shape based material may include a carbon fiber, a metal fiber and a resin fiber. The coating layer preferably contains the above described carbon, metal or metal oxide. Specific examples of such a second filler may include a filler including a carbon fiber and a nickel layer that covers a surface of the carbon fiber.

The content of the second filler in the heat conductive material relative to 100 mass parts of the matrix resin is, for example, 0.2 mass parts or more and 15 mass parts or less, and may be 1 mass part or more and 10 mass parts or less.

### (3) Filler

The heat conductive material in the present disclosure usually contains the first filler and the second filler as a main component of the filler. The heat conductive material may contain just the first filler and the second filler, and may further include an additional filler in addition to the first filler and the second filler. The ratio of the total of the first filler and the second filler with respect to all the fillers included in the heat conductive material is, usually 50 mass% or more, may be 70 mass% or more, and may be 90 mass% or more.

The ratio of the filler with respect to the total of the matrix resin and the filler is, for example, 20 mass% or more and less than 50 mass%, and may be 25 mass% or more and 45 mass% or less. Also, the ratio of the filler with respect to the total of the matrix resin and the filler is, for example, 10 volume% or more and 40 volume% or less, and may be 15 volume% or more and 35 volume% or less.

### (4) Rate of Filler X

As shown in FIG. 1A and FIG. 2, in the cross-sectional view of the heat conductive material 10, D_{L} designates a longitudinal direction of the filler F. "Filler X" designates the filler F of which angle of the longitudinal direction D_{L} relative to thickness direction D_{T} of the heat conductive material 10 is ±30° or less. In the present disclosure, the rate of the filler X with respect to all the filler F included in the heat conductive material 10 is 30% or more. The rate of the filler X may be 50% or more, may be 65% or more, may be 70% or more, may be 75% or more, and may be 80% or more. When the rate of the filler X is large, the heat conductivity further improves.

### 2. Matrix resin

The heat conductive material in the present disclosure contains a matrix resin. The matrix resin preferably has high volume resistivity. In other words, the matrix resin preferably has high insulation properties. The volume resistivity of the matrix resin is, for example, 10¹²Ωcm or more, may be 10¹³Ωcm or more, and may be 10¹⁴Ωcm or more. The volume resistivity can be obtained by a constant voltage application method.

The magnetic susceptibility of the matrix resin is usually low. The magnetic susceptibility of the matrix resin is, for example, 10⁻⁶ or less and may be 10⁻⁷ or less. Also, the heat conductivity of the matrix resin is usually lower than that of the filler. The heat conductivity of the matrix resin is, for example, 1 W/mK or less, may be 0.5 W/mK or less.

The matrix resin is preferably a cured product of a curable resin. The curable resin may be a thermosetting resin, and may be an ionizing radiation curable resin. Examples of the thermosetting resin may include a silicone resin and an epoxy resin. Examples of the silicone resin may include a straight silicone resin such as a methyl silicone resin, a methyl phenyl silicone resin, and a phenyl silicone resin; and an organic resin modified silicone resin such as an alkyd modified silicone resin, a polyester modified silicone resin, an urethane modified silicone resin, an epoxy modified silicone resin, and an acryl modified silicone resin. Also, examples of a curing agent that cures the silicone resin may include a normal temperature curing agent such as an organic titanate-based curing agent; a catalyst type curing agent such as a zinc dioctoate; and a reactive type curing agent such as a silane coupling agent.

Examples of the epoxy resin may include a bis phenol A type epoxy resin, a novolac type epoxy resin, an alicyclic type epoxy resin, a long-chain aliphatic type epoxy resin, a glycidyl ester type epoxy resin, and a glycidyl amine type epoxy resin. Also, examples of the curing agent that cures the epoxy resin may include an amine-based curing agent, an acid anhydrite-based curing agent, and a polyamide curing agent. Also, the thermosetting resin may be a one liquid curing type, and may be a two liquid curing type.

The content of the matrix resin in the heat conductive material is, for example, 50 mass% or more and 85 mass% or less, and may be 60 mass% or more and 80 mass% or less.

### 3. Heat conductive material

The heat conductive material in the present disclosure contains a matrix resin and a filler. The details of the matrix resin and the filler are as described above. The dielectric breakdown voltage of the heat conductive material in the thickness direction is preferably high. In specific, the dielectric breakdown voltage of the heat conductive material in the thickness direction is preferably 5 kV/mm or more. Also, the heat conductivity of the heat conductive material in the thickness direction is preferably high. In specific, the heat conductivity of the heat conductive material in the thickness direction is, for example, 2.03 W/mK or more, may be 2.36 W/mK or more, and may be 3.14 W/mK or more.

There are no particular limitations on the shape of the heat conductive material, and examples thereof may include a sheet shape. The "sheet shape" includes a shape referred to as a film shape or a plate shape. Also, the heat conductive material may be an arbitrary three-dimensional shape. Also, there are no particular limitations on the applications of the heat conductive material, and examples thereof may include a battery module; electronic parts such as LED and home appliances; and an information communication module such as optical communication apparatus.

### B. Method for producing heat conductive material

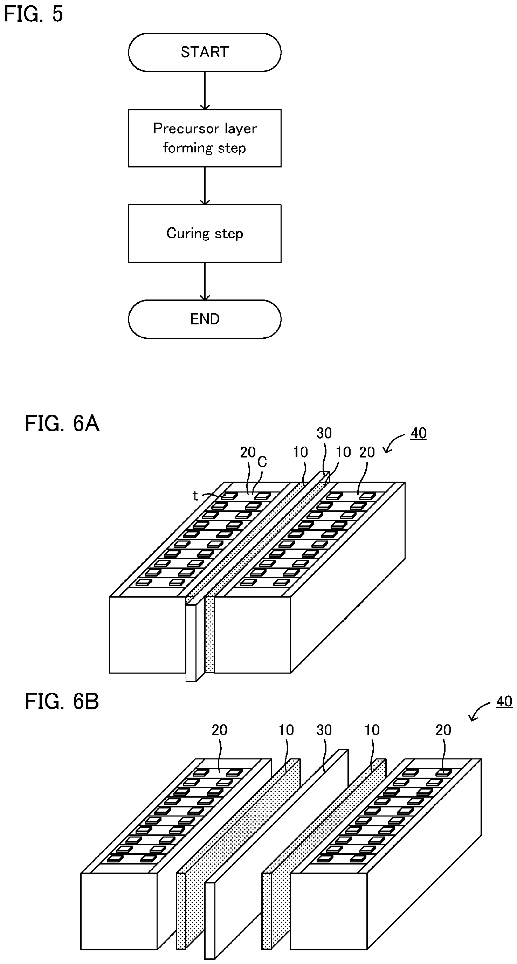

FIG. 5 is a flow chart exemplifying the method for producing the heat conductive material in the present disclosure. As shown in FIG. 5, a precursor layer is formed using a resin composition containing a curable resin for forming the matrix resin, and the filler (a precursor layer forming step). Next, the thermosetting resin is cured by applying a magnetic field to the precursor layer from the thickness direction while orienting the filler in the precursor layer (a curing step).

According to the present disclosure, when the first filler and the second filler of which magnetic susceptibility differs from one another are used, and the curable resin is cured while applying a magnetic field, the heat conductive material that achieves both heat conductivity and insulation properties is obtained.

### 1. Precursor layer forming step

The precursor layer forming step in the present disclosure is a step of forming a precursor layer using a resin composition containing a curable resin for forming the matrix resin, and the filler.

The resin composition includes the first filler and the second filler as the filler. Also, the resin composition may contain a curing agent that cures the curable resin. The details of the curable resin, the filler and the curing agent are in the same contents as those described in "A. Heat conductive material" above. The viscosity of the curable resin is, for example, preferably 1 Pa·s or less. The reason therefor is to facilitate orientation of the filler along with the magnetic field to be applied when curing the curable resin. Examples of the method for forming the precursor layer may include a method of coating the base material with the resin composition. There are no particular limitations on the kind of the base material, and examples thereof may include a heat radiating material.

### 2. Curing step

The curing step in the present disclosure is a step of curing the curable resin by applying a magnetic field to the precursor layer from the thickness direction while orienting the filler in the precursor layer.

The magnetic field is applied to the precursor layer from the thickness direction. Thereby, bar shape or flake shape filler is oriented along with the thickness direction. The magnetic flux density of the magnetic field to be applied is not particularly limited, and for example, it is 0.5 T or more and 10 T or less. When the curable resin is a thermosetting resin, the thermosetting resin may be cured at a normal temperature (room temperature), and the thermosetting resin may be cured by heating. Meanwhile, when the curable resin is an ionizing radiation curable resin, the ionizing radiation curable resin is cured by irradiating an ionizing radiation ray (such as an ultraviolet ray).

### 3. Heat conductive material

The heat conductive material obtained by the above described steps is in the same contents as those described in "A. Heat conductive material" above; thus, the descriptions herein are omitted.

### C. Battery module

FIG. 6A is a schematic perspective view exemplifying the battery module in the present disclosure, and FIG. 6B is an exploded view of FIG. 6A. The battery module 40 shown in FIGS. 6A and 6B includes battery 20, heat radiating material 30, and heat conductive material 10 disposed between the battery 20 and the heat radiating material 30.

According to the present disclosure, when the above described heat conductive material is disposed between the battery and the heat radiating material, the battery module may have excellent heat radiation properties and insulation properties.

### 1. Battery

The battery in the present disclosure usually includes at least one cell. The cell usually includes a power generating element and an outer package that covers the power generating element. The power generating element usually includes at least one power generating unit including a cathode, an anode, and an electrolyte layer disposed between the cathode and the anode. The battery 20 shown in FIGS. 6A and 6B includes a plurality of cell C arranged along with one direction.

### 2. Heat radiating material

The heat radiating material in the present disclosure is a material that receives heat generated by a chemical reaction of a battery, and radiates heat to the other medium. There are no particular limitations on the kind of the heat radiating material, and known heat radiating materials (such as a cooling material) can be used.

### 3. Heat conductive material

The heat conductive material in the present disclosure is disposed between the battery and the heat radiating material. The heat conductive material is in the same contents as those described in "A. Heat conductive material" above.

### 4. Battery module

Examples of the applications of the battery module in the present disclosure may include a power source for vehicles such as hybrid electric vehicles (HEV), plug-in hybrid electric vehicles (PHEV), battery electric vehicles (BEV), gasoline-fueled automobiles and diesel powered automobiles. In particular, it is preferably used as a power source for driving hybrid electric vehicles (HEV), plug-in hybrid electric vehicles (PHEV), and battery electric vehicles (BEV). Also, the battery module in the present disclosure may be used as a power source for moving bodies other than vehicles (such as rail road transportation, vessel and airplane), and may be used as a power source for electronic products such as information processing equipment.

The present disclosure is not limited to the embodiments. The embodiments are exemplification, and any other variations are intended to be included in the technical scope of the present disclosure if they have substantially the same constitution as the technical idea described in the claims of the present disclosure and have similar operation and effect thereto.

### Examples

### [Example 1]

As a thermosetting resin, a normal temperature curable silicone resin (viscosity: 650 mPa·s, volume resistivity: 10¹⁴Ωcm to 10¹⁶Ωcm, from Shin-Etsu Chemical Co., Ltd.) was prepared, as a first filler, a boron nitride (from Momentive) was prepared, and as a second filler, a carbon fiber (from Mitsubishi Chemical Group Corporation) was prepared. The details of the first filler and the second filler are as follows.

**[Table 2]**

| filler | kind | shape | length a [*µ* m] | length b [*µ* m] | a/b | volume resistivity [Ω · cm] | magnetic susceptibility [-] |
|---|---|---|---|---|---|---|---|
| first filler | boron nitride | flake | 30-100 | 2 | 15-50 | 10¹⁴ | < 10⁻⁶ |
| second filler | carbon fiber | bar | 50 | 11 | 4.5 | 10⁻³ | 10⁻⁴ |

The thermosetting resin was weighed to be 75 mass parts, the first filler was weighed to be 24 mass parts, and the second filler was weighed to be 1 mass part, and those were mixed and agitated using a rotating/revolving mixer. The obtained composition was poured into a container for curing (10mm thick), and placed still for 90 minutes at a normal temperature while applying magnetic field with magnetic flux density of 8T from up and down surfaces of the thickness direction using a magnetic field forming device with a pulse magnetizing coil, and thereby the thermosetting resin was cured. In this manner, a sheet shape heat conductive material was obtained.

### [Examples 2 to 4 and Comparative Examples 1 to 3]

A heat conductive material was respectively obtained in the same manner as in Example 1, except that the blending amount of the thermosetting resin, the first filler and the second filler was respectively changed as shown in Table 3.

### [Comparative Examples 4 to 11]

A heat conductive material was respectively obtained in the same manner as in Example 1, except that the blending amount of the thermosetting resin, the first filler and the second filler was respectively changed as shown in Table 4, and further, the magnetic field was not applied.

### [Evaluation]

### <Rate of filler X>

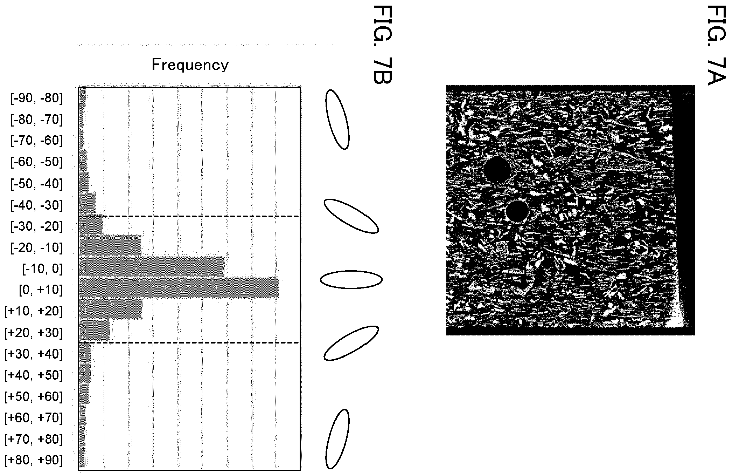

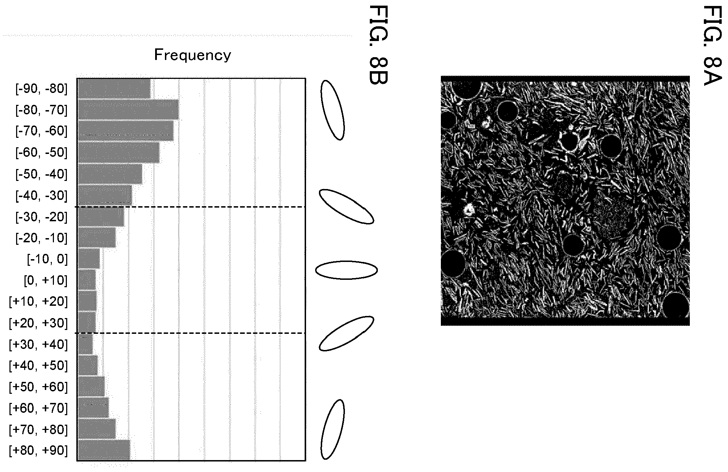

The rates of the filler X in the heat conductive materials obtained in Examples 1 to 4 and Comparative Examples 1 to 11 were measured. In specific, cross-sectional images were prepared by a CT detecting device, the cross-sectional images were binarized, and the angles of the fillers in the binarized images were measured to produce histograms. The results are shown in Table 3 and Table 4. Also, FIG. 7A is a binarized image of the cross-section of the heat conductive material obtained in Example 3, and FIG. 7B is a histogram categorized by angles of the filler in FIG. 7A in the longitudinal direction relative to the thickness direction of the heat conductive material. Similarly, FIG. 8A is a binarized image of the cross-section of the heat conductive material obtained in Comparative Example 9, and FIG. 8B is a histogram categorized by angles of the filler in FIG. 8A in the longitudinal direction relative to the thickness direction of the heat conductive material. As shown in FIGS. 7A and 7B, when the magnetic field was applied, the rate of the filler X was 84%, which was high. In contrast, as shown in FIGS. 8A and 8B, when the magnetic field was not applied, the rate of the filler X was 23%, which was low.

### <Heat conductivity measurement>

The heat conductivity of the heat conductive materials obtained in Examples 1 to 4 and Comparative Examples 1 to 11 was respectively measured. In specific, the heat conductivity of the heat conductive materials was measured by a steady state method (heat flowmeter method). The results are shown in Table 3 and Table 4.

### <Dielectric breakdown voltage measurement>

The dielectric breakdown voltage (BDV) of the heat conductive materials obtained in Examples 1 to 4 and Comparative Examples 1 to 11 was respectively measured. In specific, in accordance with IEC 60243-1, the voltage when dielectric breakdown occurred was divided by the thickness of the heat conductive material to obtain the dielectric breakdown voltage. The results are shown in Table 3 and Table 4.

**[Table 3]**

| | Comp. Ex. 1 | Comp. Ex. 2 | Comp. Ex. 3 | Example 1 | Example 2 | Example 3 | Example 4 |
|---|---|---|---|---|---|---|---|
| Thermosetting resin (mass part) | 75 | 67 | 61 | 75 | 67 | 61 | 54 |
| First filler (mass part) | 25 | 33 | 39 | 24 | 31 | 37 | 41 |
| Second filler (mass part) | - | - | - | 1 | 2 | 2 | 5 |
| Filler amount (mass %) | 25 | 33 | 39 | 25 | 33 | 39 | 46 |
| Filler amount (vol %) | 15 | 20 | 25 | 15 | 20 | 25 | 30 |
| Magnetic filed | Applied | Applied | Applied | Applied | Applied | Applied | Applied |
| Rate of filler X (%) | 60 | 60 | 60 | 75 | 80 | 84 | 85 |
| Heat conductivity (W/mK) | 2.19 | 2.71 | 3.06 | 2.36 | 3.14 | 3.60 | 4.06 |
| Dielectric breakdown voltage (kV/mm) | >5 | >5 | >5 | >5 | >5 | >5 | >5 |

**[Table 4]**

| | Comp Ex. 4 | Comp Ex. 5 | Comp Ex. 6 | Comp Ex. 7 | Comp Ex. 8 | Comp Ex. 9 | Comp Ex. 10 | Comp Ex. 11 |
|---|---|---|---|---|---|---|---|---|
| Thermosetting resin (mass part) | 75 | 67 | 61 | 75 | 67 | 61 | 54 | 85 |
| First filler (mass part) | 25 | 33 | 39 | 24 | 31 | 37 | 41 | - |
| Second filler (mass part) | - | - | - | 1 | 2 | 2 | 5 | 15 |
| Filler amount (mass %) | 25 | 33 | 39 | 25 | 33 | 39 | 46 | 15 |
| Filler amount (vol %) | 15 | 20 | 25 | 15 | 20 | 25 | 30 | 8 |
| Magnetic filed | Not applied | Not applied | Not applied | Not applied | Not applied | Not applied | Not applied | Not applied |
| Rate of filler X (%) | <25 | <25 | <25 | <25 | <25 | <25 | <25 | <25 |
| Heat conductivity (W/mK) | 1.98 | 1.81 | 1.88 | 1.82 | 2.02 | 2.00 | 1.85 | 1.63 |
| Dielectric breakdown voltage (kV/mm) | >5 | >5 | >5 | >5 | >5 | >5 | 3.5 | <1 |

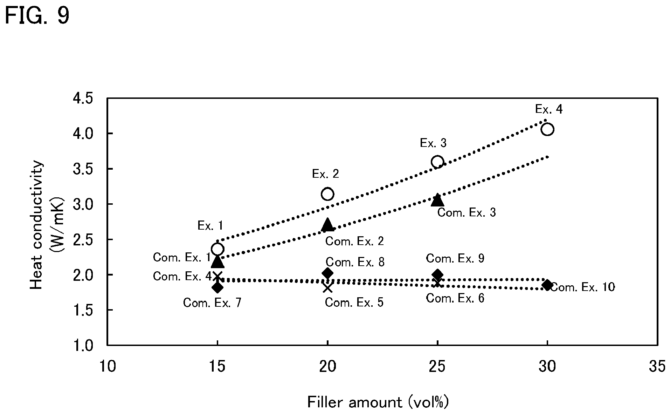

FIG. 9 is a graph showing the relation of the filler amount and the heat conductivity in Examples 1 to 4 and Comparative Examples 1 to 10. As shown in FIG. 9, Table 3 and Table 4, in Comparative Examples 4 to 6, the first filler was used, but the second filler was not used, and the magnetic field was not applied when curing the thermosetting resin, and thus the filler was not oriented along with the thickness direction, and the heat conductivity in the thickness direction was low. Also, in Comparative Examples 4 to 6, the heat conductivity did not improve even when the filler amount was increased. Incidentally, in Comparative Examples 4 to 6, the dielectric breakdown voltage was high and excellent insulation properties were obtained.

In Comparative Examples 7 to 10, both of the first filler and the second filler were used, but the magnetic field was not applied when curing the thermosetting resin, and thus the filler was not oriented along with the thickness direction, and the heat conductivity in the thickness direction was low. Also, in Comparative Examples 7 to 10, the heat conductivity did not improve even when the filler amount was increased. In Comparative Example 10, degrade in the dielectric breakdown voltage was confirmed. This is presumably because the ratio of the second filler that had high conductivity was too much. Also, in Comparative Example 11, the second filler was used, but the first filler that had high heat conductivity was not used, and further, the magnetic field was not applied when curing the thermosetting resin, and thus the heat conductivity was low. Also, since the second filler had high conductivity, the dielectric breakdown voltage was low, and thus excellent insulation properties were not obtained.

In Comparative Examples 1 to 3, the first filler was used, and the second filler was not used, but the magnetic field was applied when curing the thermosetting resin, and thus the filler was oriented along with the thickness direction, and the heat conductivity was comparatively high. Also, in Comparative Examples 1 to 3, when the filler amount was increased, the heat conductivity improved, and the dielectric breakdown voltage was also high.

In Examples 1 and 4, since both of the first filler and the second filler were used, and the magnetic field was applied when curing the thermosetting resin, the filler was oriented along with the thickness direction, and the heat conductivity was remarkably high. When comparing Examples 1 to 3 to Comparative Examples 1 to 3, the heat conductivity in Examples 1 and 3 was higher than the heat conductivity in Comparative Examples 1 to 3. This is presumably because the orientation of the first filler was improved by using the second filler of which magnetic field responsiveness was high. In other words, it was confirmed that a synergistic effect was obtained when both of the first filler and the second filler were used. Also, in Examples 1 and 4, when the filler amount was increased, the heat conductivity improved, and the dielectric breakdown voltage was also high. In this manner, it was confirmed that the heat conductive material that achieves both the heat conductivity and the insulation properties was obtained when the first filler and the second filler of which magnetic susceptibility differs from one another were used, and further when the rate of the filler X was in the specified range.

### Reference Sings List

- 1: matrix resin
- 2: first filler
- 3: second filler
- 10: heat conductive material
- 20: battery
- 30: heat radiating material
- 40: battery module

## Claims

1. A heat conductive material **characterized by** comprising a matrix resin and a filler, wherein
the filler includes a first filler that is a bar shape or a flake shape, and a second filler that is a bar shape or a flake shape;
a volume resistivity of the first filler is 10¹²Ωcm or more;
a magnetic susceptibility of the first filler is 10⁻⁶ or less;
a magnetic susceptibility of the second filler is 10⁻⁵ or more;
a content of the first filler is more than a content of the second filler; and
in a cross-sectional view of the heat conductive material, when a filler X designates the filler of which angle of the longitudinal direction relative to a thickness direction of the heat conductive material is ±30° or less, a rate of the filler X with respect to all the filler is 30% or more.

2. The heat conductive material according to claim 1, **characterized in that** a dielectric breakdown voltage of the heat conductive material in the thickness direction is 5 kV/mm or more.

3. The heat conductive material according to claim 1, **characterized in that** a heat conductivity of the heat conductive material in the thickness direction is 2.03 W/mK or more.

4. The heat conductive material according to claim 1, **characterized in that** a ratio of the filler with respect to a total of the matrix resin and the filler is 20 mass% or more and less than 50 mass%.

5. The heat conductive material according to claim 1, **characterized in that** a ratio of the filler X with respect to all the filler is 50% or more.

6. The heat conductive material according to claim 1, **characterized in that** a volume resistivity of the second filler is 10⁻²Ωcm or less.

7. The heat conductive material according to claim 1, **characterized in that** the matrix resin is a cured product of a curable resin.

8. The heat conductive material according to claim 7, **characterized in that** the curable resin is a thermosetting resin.

9. The heat conductive material according to claim 8, **characterized in that** the thermosetting resin is a silicone resin or an epoxy resin.

10. The heat conductive material according to claim 1, **characterized in that** the first filler is a flake shape, and the second filler is a bar shape.

11. The heat conductive material according to claim 1, **characterized in that** a material of the first filer is a boron nitride, an aluminum nitride, a silicon nitride, a beryllia, a magnesia, or an alumina.

12. The heat conductive material according to claim 1, **characterized in that** a material of the second filler is a carbon, a metal or a metal oxide.

13. The heat conductive material according to claim 1, **characterized in that** the heat conductive material is used in a battery module.

14. A method for producing the heat conductive material according to any one of claims 1 to 13, the method **characterized by** comprising:
a precursor layer forming step of forming a precursor layer using a resin composition containing a curable resin for forming the matrix resin, and the filler; and
a curing step of curing the thermosetting resin by applying a magnetic field to the precursor layer from the thickness direction while orienting the filler in the precursor layer.

15. A battery module **characterized by** comprising a battery and a heat radiating material, wherein
the heat conductive material according to any one of claims 1 to 13 is disposed between the battery and the heat radiating material.
